# EUROPEAN PATENT APPLICATION

(11) **EP 1 310 307 A2**
(43) Date of publication of application: **14.05.2003**
(21) Application number: 02102515.0
(22) Date of filing: 31.10.2002
(51) Int. Cl.: B09B 3/00, B03B 9/06, C10L 5/46, C05F 9/00

(54) **Method and arrangement for utilizing dry solid waste from households**

(30) Priority: 07.11.2001 FI 20015037
(71) Applicant: VAPO OY, 40100 Jyväskylä (FI)
(72) Inventor: Mutka, Kari, 40250 Jyväskylä (FI); Nieminen, Karel, 02270 Espoo (FI)
(74) Representative: Helke, Kimmo Kalervo

(57) **Abstract**

In the method for utilizing dry solid waste from households
- the dry solid waste is separated (1) into fractions, which include a combustible fraction (REF), a non-combustible fraction and a metal fraction, and
- the non-combustible fraction is composted (2.1) to become suitable for sanitary landfill, and
- the combustible fraction is treated bio-thermally (2.2) and it is conducted to incineration to utilize its energy. In this manner the thermal value rises and the quality becomes more uniform.

## Description

The invention concerns a method and an arrangement for utilizing dry solid waste from households, in which method the dry solid waste is separated into a combustible (REF) fraction and a non-combustible fraction, also separating any metal fraction from the dry solid waste, and wherein the non-combustible fraction is composted to become suitable for sanitary landfill, while the combustible fraction is conducted to incineration in order to utilize its energy.

Mixed waste is household waste of different types without any separate collection. Dry solid waste is the waste remaining of the household waste after separate collection (organic waste and advantageously glass, metal and paper).

In recent years plants have been inaugurated, which produce recycled fuel (REF). This technology is described in the publication "Jätteet energiaksi" ("Waste into energy") 1999 of the Technical Research Center of Finland (VTT) and in publications relating to the technology program "Jätteiden energiakäyttö" ("Energy use of waste") of the Finnish Technology Development Center (TEKES).

However, the water content of dry solid waste and of the recycled fuel derived from it is often considerably high, at least occasionally.

Gasification of recycled fuel and its use together with other fuel is considered to be the best alternative for using recycled fuel. Hereby the product gas obtained from the gasifier is combusted as a parallel fuel, whereby trouble in the boiler proper is minimized. The gasifier may be optimised for recycled fuel and any trouble therein will not jeopardize the operation of the entire plant.

Ways of handling mixed waste have been presented e.g. in patent publications EP 706839, WO 83/02779 and US 4,203,376 and also in the German application publications DE 4139512, DE 19640473 and DE 19800704. DE publication '473 presents a solution based on composting and gasification. By composting/bio-thermal treatment the separation of mixed waste is facilitated and the thermal value of the combustible mass will rise.

Patent publications DE-OS 44 34 611 and EP 874700 present methods for treating waste, wherein essentially the whole quantity of waste is composted for a period of 6 - 8 days, and only then the separation into a combustible fraction and a non-combustible fraction is carried out. Since the requirements concerning treatment of organic waste intended for sanitary landfill are becoming increasingly stricter, it is inappropriate to treat also the combustible fraction in accordance with strict requirements.

By composting the entire quantity of waste its separation becomes easier, but it also involves problems. Firstly, separation causes problems relating to work hygiene due to a strong formation of dust. On the other hand, the non-combustible fraction is not yet ready for transportation to the sanitary landfill, if the newer waste disposal regulations of the EU are observed. A short composting time is sufficient for hygienic purposes, but it is not sufficient for adequate maturing of the compost. In the future EU directive for organic waste, the minimum maturity of waste intended for sanitary landfill is defined as 400 mg/O₂/kg dry matter/h.

The intention of the present invention is to bring about an improved method and arrangement for utilizing dry solid waste from households. The characteristic features of the invention are presented in the appended claims. Although separation of dry solid waste is more difficult and the resulting combustible fraction is soiled, the separation is not associated with any dusting problems of the kind mentioned above. An optimum biological treatment is done here for each main fraction. For the mass to be composted a treatment of sufficient length (3 weeks) is done, which is known as such, but now the combustible fraction is also treated bio-thermally, preferably in a composting tunnel for five days and nights. Hereby it becomes easier to treat, its thermal value rises and quality variations are reduced.

According to an advantageous embodiment, a small combustible fraction, mainly plastic materials, is further separated from the composted mass.

The method according to the invention is preferably applied with the aid of the arrangement defined by claim 5. Both fractions are treated in composting tunnels selected for each and wherein the thermal economy is managed jointly, whereby the heat produced by other batches is utilized in the treatment of a new batch.

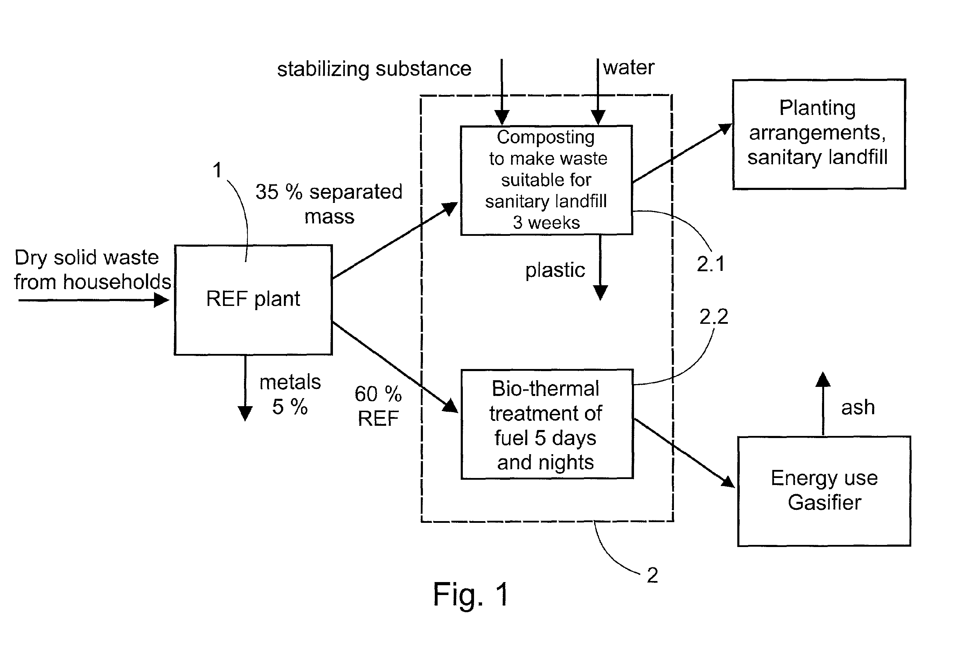

In the following, the invention will be described with the aid of an example by referring also to the appended Fig. 1, which is a schematic view of the arrangement according to the invention.

Fig. 1 shows a method and an arrangement according to the invention for utilizing dry solid waste from households. Reference number 1 indicates a plant for producing recycled fuel and reference number 2 indicates a tunnel composting plant, wherein the composting part for non-combustible mass is indicated by reference number 2.1 and the part for bio-thermal treatment of the combustible mass is indicated by reference number 2.2. It is advantageous to integrate the plants as one plant, because e.g. conveying equipment can be utilized in both plants. In addition, the great heat production of the tunnel composting plant may be utilized for drying selected fractions in the REF plant and/or for heating the arriving mass.

Production of recycled fuel (REF) is known technology as such and numerous such plants are in use. The treatment usually includes crushing steps and various separations using both screens and pneumatic methods.

Tunnel composting and its relating equipment have been presented e.g. in the applicant's patent publications EP 771775 and WO 00/14186. Dimensioning of the plant depends on the desired treatment capacity. A tunnel composting plant may have, for example, 15 tunnels, of which 10 are here reserved for composting the non-combustible fraction and 5 are reserved for bio-thermal treatment of the combustible fraction. The equipment of these may be somewhat different, because stabilizing substance and water must be added during the composting proper to the mass to be composted. However, the bio-thermal treatment does not require any intermediate measures and especially no wetting of the mass.

A tunnel composting plant includes equipment for transferring the mass between the different places of treatment/intermediate storages as well as agitating equipment for agitating the necessary stabilizing substance and also screening equipment for separating the small quantity of plastics from the composted mass.

In the typical situation shown in the figure, the dry solid waste from households in a REF plant yields 35 % of mass for composting, 60 % of recycled fuel (REF) and 5 % of recoverable metal. The yield of recycled fuel from the dry solid waste depends on the composition of the raw material, that is, the waste.

The treatment, composting and bio-thermal treatment of masses take place on the batch principle in tunnels. Before the mass to be composted is transferred into tunnels it is admixed with some stabilizing substance, e.g. peat or wood chips, if required. Composting will take 2 - 4 weeks mainly at a temperature of 50 - 55 °C, usually 3 weeks. Nowadays the sanitary treatment is done at a temperature of 50 - 55 °C during 2 days and nights. Water must be added to the mass during composting, so that the biological process is maintained. After composting, it is also possible to separate some combustible material, usually plastic materials, which are added to the other combustible fraction. The composted mass may be used either for planting arrangements or for structures at the sanitary landfill.

Composting of the non-combustible fraction and bio-thermal treatment of the combustible fraction are both done in batches in a common tunnel composting plant in such a way that both fractions are treated in composting tunnels, which are selected in each case and the thermal economy of which is managed jointly, whereby the heat produced by other batches is utilized in the treatment of a new batch.

The combustible fraction is treated bio-thermally considerably faster in composting tunnels of its own for 3 - 8, preferably 4 - 6 days and nights mainly at a temperature of 50 - 60 °C. It is useful for these to be located in connection with the other tunnels, and the initial and/or final heating of these tunnels is also obtained from the common arrangement of the plant. It has been found as such that the soiled recycled fuel contains such a quantity of material suitable for composting, that the process maintains itself even for four days. The composting process and the evaporation are controlled by changing the quantity of fresh air in the composting. At the beginning and end of the process it is useful to obtain additional heat from the common arrangement of the plant. The thermal value of the combustible fraction will rise as the mass dries, it becomes more hygienic and of a more uniform quality.

In the integrated REF and tunnel composting plant it is possible to utilize both common conveying, crushing and screening equipment. In addition, the common plant includes equipment for using the heat produced by composting for drying chosen fractions and/or for heating the incoming mass.

Treatment of the mass to be incinerated takes place as such without any stabilizing substance of the compost.

The obtained fuel is conducted either to gasification or to a special boiler plant. The quantity of ash finally remaining is approximately 10 % by weight of the recycled fuel quantity.

## Claims

1. Method for utilizing dry solid waste from households, in which method
- the dry solid waste is separated (1) into fractions, which include a combustible fraction (REF), a non-combustible fraction and a metal fraction, and
- the non-combustible fraction is composted (2.1) to become suitable for sanitary landfill, and
- the combustible fraction is conducted to incineration in order to utilize its energy,
**characterized in that** the combustible fraction is treated bio-thermally (2.2) in order to raise its thermal value and to make its quality more uniform before it is conducted to incineration, whereby the bio-thermal treatment lasts for an essentially shorter time than the composting of the non-combustible fraction.

2. Method according to claim 1, **characterized in that** the composting of the non-combustible fraction and the bio-thermal treatment of the combustible fraction are both done in batches in a common tunnel composting plant (2) in such a way that both fractions are treated in composting tunnels, which are selected in each case and the thermal economy of which is managed jointly, whereby the heat produced by the other batches is utilized in the treatment of a new batch.

3. Method according to claim 2, **characterized in that** the non-combustible fraction is composted for 2 - 4 weeks mainly at a temperature of 45 - 60 °C, and the combustible fraction is treated bio-thermally by composting it for 3 - 8, preferably 4 - 6 days and nights mainly at a temperature of 45 - 60 °C as such without any stabilizing substance from the compost.

4. Method according to claim 2 or 3, **characterized in that** from the composted mass of non-combustible fraction a small combustible part is separated for adding to the said combustible fraction.

5. Arrangement for efficient utilization of dry solid waste, which arrangement includes
- a so-called REF plant (1) for separation of dry solid waste into a combustible fraction and a non-combustible fraction and a metal fraction, and
- a tunnel composting plant (2) for composting the non-combustible fraction,
**characterized in that** the tunnel composting plant is integrated in connection with the REF plant and it is adapted to treat (2.2) also the combustible fraction bio-thermally.

6. Arrangement according to claim 2, **characterized in that** it includes equipment for separating the combustible part, mainly plastic material, from the composted mass of non-combustible fraction.
